Europäisches Patentamt

European Patent Office

Office européen des brevets

(19)

(11) Publication number: **0 107 610**
**A1**

# EUROPEAN PATENT APPLICATION

(21) Application number: 83630162.2

(22) Date of filing: 03.10.83

(51) Int. Cl.³: **G 05 D 16/20**

(30) Priority: **21.10.82 US 436140**

(43) Date of publication of application: **02.05.84**
**Bulletin 84/18**

(84) Designated Contracting States: **AT BE CH DE FR GB IT LI NL**

(71) Applicant: **UNITED TECHNOLOGIES CORPORATION, United Technologies Building 1, Financial Plaza, Hartford, CT 06101 (US)**

(72) Inventor: **Bujak, Walter Edward, 53 Cornwall Drive, Windsor Locks Connecticut 06096 (US)**
Inventor: **Silver, Carleton Allen, 106 Grove Street, West Hartford Connecticut 06110 (US)**
Inventor: **Tempel, Louis John, Haddam Quarter Road, Durham Connecticut 06422 (US)**
Inventor: **Wilson, Charles Samuel, 278 Connecticut Avenue, Newington Connecticut 06111 (US)**

(74) Representative: **Waxweiler, Jean et al, OFFICE DENNEMEYER S.à.r.l. 21-25 Allée Scheffer P.O.Box 41, L-2010 Luxembourg (LU)**

(54) **Electrical signal to pneumatic pressure signal transducer.**

(57) An electrical signal-to-pneumatic pressure signal transducer (10) converts a desired control pressure electrical signal ($P_{DES}$) to a load control pressure pneumatic signal by modulating fluid source flow to the load (14) through gated solenoid valves (24, 36) actuated in response to a difference value ($P_e$) between the desired pressure electrical signal ($P_{DES}$) and an actual sensed control pressure electrical signal ($P_{SEN}$).

- 1 -

## Description

## Electrical Signal to Pneumatic
## Pressure Signal Transducer

### Technical Field

This invention relates to transducers, and more particularly to electrical signal to pneumatic signal transducers.

### Background Art

As known, closed loop control of a given system's performance involves sensing and processing system operating indicia to produce control sisgnals for regulating operation of a particular controlled device within the system. The sensed signal processing and conditioning is preferably electronic since it is the most efficient signal form. The controlled system itself may be principally nonelectrical, such as the high population of existing pneumatic systems in the heating, ventilating, air conditioning (HVAC) field. As such, transducer devices are needed for converting between signal forms.

In pneumatic operating systems the principal performance parameter is fluid pressure. Devices for converting electrical signal magnitude (current or voltage) to fluid pressure values are known. These prior art transducers, however, are primarily electromechanical force-balance devices which provide a current signal to control pressure signal conversion. The actual control pressure signal value is not known. The force balance device provides the actual control pressure value by position balance of a needle valve. Equalizing

0107610

- 2 -

the force due to the actual control pressure acting
on one side of the valve with that of a reference force
proportional to the electrical signal magnitude on the
other results in positioning the valve in an equilibrium
state.  This equilibrium state positions the valve in
the valve orifice in such a manner as to modulate the
pneumatic source fluid flow to maintain the output control pressure.  A change in control pressure value
unbalances the needle equilibrium and displacing the
valve to allow more or less source fluid flow, as
required, until a quiescent balance state is restored.
Since undulation of control pressure signal magnitude
is unavoidable there is a constant, cyclic motion of
the valve and of source fluid discharge.

Disadvantages of this type of device include:
Control pressure inaccuracies due to the inability to
sense actual control pressure output values, low cubic
meter per minute (CMM) flow rates between fluid source
and load, presence of a constant fluid drain on the
fluid source, and susceptibility to dirt and oil which
affects valve balance.

Disclosure of Invention

One object of the present invention is to provide
an accurate electrical signal to pneumatic pressure
signal transducing device.  Other objects of the present invention include providing an electrical to
pneumatic transducer with fast response and low source
fluid drain.

According to the present invention, a desired
control pressure value represented by an electrical
signal equivalent actuates a gated source valve which provides full CMM fluid flow to the transducer output from a fluid source, the actual output pressure is sensed and reconverted to an electrical feedback signal equivalent which is compared with the desired pressure electrical signal equivalent to provide a difference signal magnitude for controlled actuation, alternately, of the gated source valve to increase control pressure or a discharge valve to reduce control pressure to the desired pneumatic control pressure value. In further accord with the present invention the transducer provides the controlled actuation of alternate valves in response to difference signal magnitudes greater than and less than that defined by a hysteresis deadband to minimize dithering actuation of the alternate solenoid of the gated fill and discharge valves.

The transducing device of the present invention provides accurate conversion from electrical to pneumatic pressure values. The closed loop sensing of the actual output pressure eliminates the load dependency characteristic inherent in prior art devices. The type of pneumatic load attached to the valve, whether high gain or low gain (e.g. a pilot positioner which is small displacement or a direct acting valve which is a large displacement device), do not result in dithering of the transducer output. The resulting change in control pressure is corrected immediately via the closed loop control to account for the change in displacement values. This of course eliminates the bleed air condition inherent with the prior art devices, ensuring the integrity of the main air source.

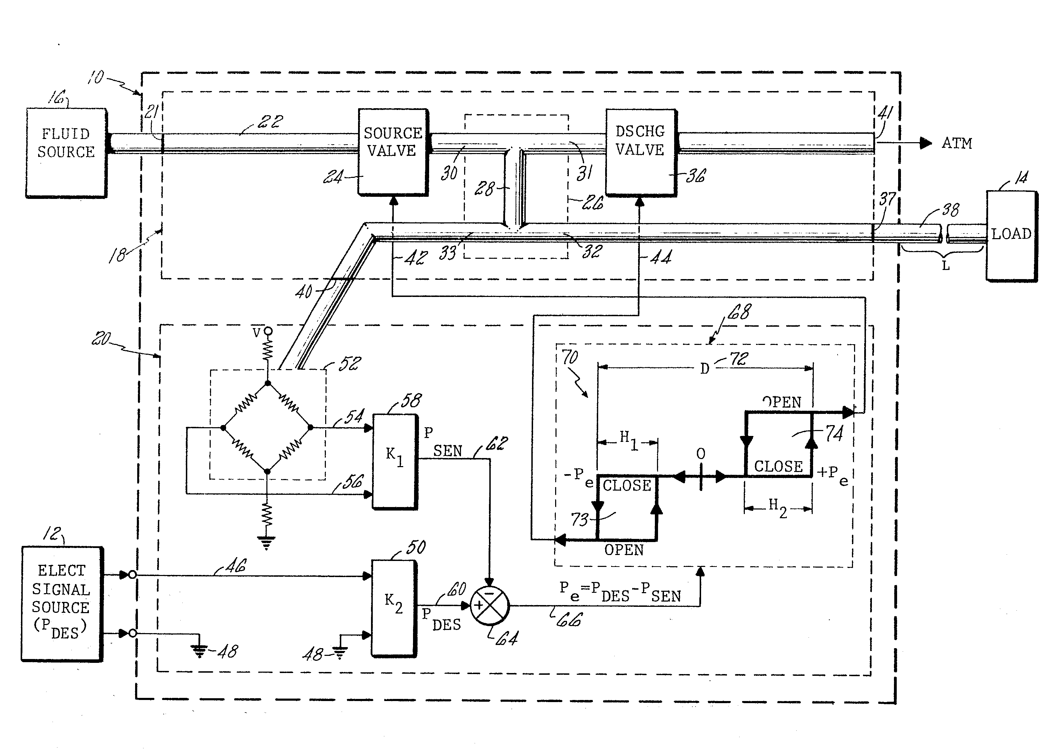

These and other objects, features and advantages of the present invention will become more apparent in light of the following detailed description of a best mode embodiment thereof as illustrated in the accompanying Drawing(s).

- 4 -

Brief Description of Drawing(s)

The single Fig. of the Drawing is a system diagram illustration of an electrical signal-to-pneumatic pressure signal transducer according to the present invention.

Best Mode for Carrying Out the Invention

Referring to the Drawing, the present invention electrical signal-to-pneumatic pressure signal transducer 10 .converts a desired control pressure electrical signal (whether current or voltage) from an electrical signal source 12 to an actual control pressure pneumatic signal which is presented to a load 14. The transducer provides the control pneumatic pressure signal by regulating pneumatic fluid flow from a fluid source 16 to the load as a function of the desired pressure electrical signal magnitude.

The transducer includes two subsystems: a pneumatic regulator 18 and an electronic control 20. The pneumatic regulator inlet port 21 recieves the pneumatic source fluid (e.g. air) through pneumatic tubing 22 of a type known in the art, the distal end of which is connected to a solenoid actuated pneumatic source valve 24. The source valve is also of a type known in the art, such as the LDI Pneutronics series 11 valve. The valve is bistable. It provides an on/off response e.g. full turn-on or turn-off of fluid flow from the tube 22 to the valve output, which is connected to one input of a manifold assembly 26. The manifold assembly is only exemplary and its use is discretionary. It comprises two "T" sections joined along a common stem 28 to provide a pneumatic I/O interface with four orifices 30-33.

Orifice 30 connected to the source valve 24 is the manifold inlet. Orifices 31-33 are manifold outlets connected respectively to: a solenoid actuated pneumatic discharge valve 36, the transducer outlet port 37 which is connected through pneumatic tubing 38 to the pneumatic signal load, and the transducer sensed control pressure port 40. The discharge valve 36, which may be identical to source valve 24 is connected at its output to the transducer discharge port 41 which is vented to the transducer external environment. The two gated valves are actuated by an electrical gate signal on lines 42, 44 from the electronic control 20 which provides the gate signals in response to the existance of a difference valve between the desired control pressure electrical signal and the sensed control pressure electrical signal, as described in detail hereinafter.

The load tubing 38 connects the transducer outlet port 37 with the pneumatic load 14 through a minimum length (L) of tubing. This minimum length L, as measured from the outlet port to the load input, is required to provide proper damping of the pneumatic response characteristics of the outlet port 37 with the pneumatic response of the load 14. The minimum length provides a minimum fluid volume to the transducer which prevents a step response of the output control pressure at the port 37. This in turn prevents pressure signal saturation at the outlet port and permits linear pressurization of the load to the desired control pressure value. If allowed to saturate the port pressure creates a pressure overshoot condition resulting in the discharge valve being turned on and venting the load fluid to atmosphere until the overshoot is eliminated. Once the pressure drops, causing the discharge valve to shut off, the port 37 pressure would again saturate due to the opening of the source valve, causing the cycle to repeat.

The actual minimum length is a function of the input pneumatic characteristics of the load. For worst case loads, e.g. small volume loads, the minimum interconnecting volume is on the order of three cubic inches. Depending on the selected pneumatic tubing cross section, this defines the minimum length.

In the operation of the pneumatic regulator the source and discharge valves are alternately actuated. Each operates in the opposite state of the other. The discharge valve which depressurizes the load is never gated on (e.g. opened) while the source valve is on, thereby preventing "dumping" of the source air during reduction of load pressure. In the present embodiment the valves are assumed to be positive logic, e.g. actuated with a positive gate signal for a time interval coextensive with the positive level of the gate signal. For an initial depressurized condition in which the control pressure pneumatic signal value is less than the desired pressure electrical signal value, the source valve 24 is gated on by the control 20 connecting the fluid source through tubing 38 to the load 14. The actual line pressure is sensed at the sensed control pressure port 40 and when the sensed control pressure signal value is equal to the desired control pressure the source valve is turned off. Assuming no pressure overshoot, both valves remain off sealing the load input to maintain the desired control pressure value. To lower the pressure the discharge valve is actuated to vent line 38 to atmosphere until the new pressure value is achieved and the discharge valve is closed. As stated, the two valves operate without overlap. This is provided by a combined hystereses deadband characteristic of the valve actuating gate signal driven within the electronic control 20.

The electronic control 20 receives the desired control pressure value ($P_{DES}$) electrical signal from the source 12. In the Drawing the source is generalized. It may comprise either a voltage or current source. Similarly the signal form may be either analog or digital, e.g. the signal may be a control system output signal or a digital signal format provided through operator keyboard entry. The signal is conditioned through network 50 which includes gain $K_2$ to scale the input signal magnitude to that selected for the control system. Frequency compensation may also be included depending on the signal source characteristics, all of which may be provided through techniques known to those skilled in the art of control technology.

The actual control pressure pneumatic signal value is sensed at pressure port 40 of the pneumatic regulator 18 by pressure sensor 52. The sensor is preferably a variable resistance bridge of a type known in the art, such as the Motorola model MPX 100. However, any suitable pressure sensing device may be used as may be known to those skilled in the art, depending on the range of sensed pressure values. In the present embodiment the assumed range of pressures for the load 14 is 0.207-1.035 bar.

The output of the sensor bridge is a differential signal provided on lines 54, 56 to gain network circuit 58 similar to network 50. It provides signal conditioning and gain scaling $(K_1)$ to equate the sensed pressure electrical signal scaling of the sensor bridge 52 to that of $(P_{DES})$. The electrical output signals from both networks, the desired pressure $(P_{DES})$ and sensed pressure $(P_{SEN})$ are provided on lines 60, 62 to summing junction 64. The summing junction provides the difference signal: $P_e = P_{DES} - P_{SEN}$ on output line 66 to the valve solenoid driver circuitry 68.

The solenoid driver circuitry 68 provides the bistable electrical gate signals to actuate the source and discharge valves (24, 36). The gate signals provide actuation of the valve when in the positive, or high level state and deactuation when in the zero or low state. The driver circuit is of a known type and provides the output signal form required by the electrical load, e.g. a current calibrated or voltage calibrated solenoid coil. The solenoid driver circuit embodies the hystereses-deadband transfer function described hereinbefore, and illustrated by transfer characteristic 70 in the solenoid driver block 68.

The transfer characteristic includes the combination deadband (D) 72 and hystereses $(H_1)$ 73 and $(H_2)$ 74 characteristics. The error signal from the summing junction on the line 66 $(P_e = P_{DES} - P_{SEN})$ is presented to the solenoid driver. Positive error signals indicating a $P_{DES} > P_{SEN}$ by a selected positive amount $(+\Delta P_e)$ allows the solenoid driver to turn on the source valve. This pressurizes the line 38 until $P_{SEN}$ approximately equals $P_{DES}$ (e.g. $\Delta P_e \cong 0$). At that time the source valve is turned off. The line pressure is lowered by actuating the discharge valve whenever $P_{DES} < P_{SEN}$ by $-\Delta P_e$. This occurs at the deadband (D) lower limit; a magnitude less than that associated with deactuation of the source valve. The discharge valve is opened, reducing line pressure to that essentially equal to desired pressure; a pressure value lower by the hystereses value $(H_1)$ than that associated with actuation of the discharge valve. The turnoff of the discharge valve seals the load, maintaining load pressure. For a load pressure range on the order of 0.207-1.035 bar the deadband (D) is on the order of 0.013-0.034 bar. The hystereses values $H_1$ and $H_2$ are approximately 0.004-0.117 bar.

The electrical to pneumatic pressure signal transducer of the present invention employs the use of actual sensed feedback of the output pneumatic pressure to achieve optimum control over the control pressure value. This allows not only for accurate control pressure setpoint but also speed of response in achieving the desire pneumatic output signal magnitude. This is permitted by the use of full CMM gated valves to control the sourcing and discharge of the fluid from the pneumatic system. This gated valve drive in combination with the hysteresis-deadband characteristic of the drive signals to the gated valves and the actual sensed feedback pressure signal permit functional separation of each valve actuation. This eliminates the problems associated with overshoot and valve overlapping operation which creates a supply source drain. It also eliminates dithering of the valve resulting in a fluctuating control pressure.

- 10 -

The present transducer may be used with any of a variety of pneumatic loads, both low volume pilot positioning type devices (fast response) and the high volume direct fill actuators which are characteristically slower. The present signal transducer is independent of the load characteristics with regard to operation, allowing the present transducer to be useful in a wider variety of applications and installations.

Similarly, although the invention has been shown and described with respect to a best mode embodiment thereof, it should be understood by those skilled in the art that various other changes, omissions and deletions may be made therein without departing from the spirit and scope of the invention.

- 11 -

Claims

1.   Electrical signal-to-pneumatic pressure signal transducer apparatus for providing an actual control pressure pneumatic signal in response to a desired control pressure electrical signal in a system having a desired control pressure electrical signal source, a pneumatic fluid source, and pneumatic signal load, comprising:

pneumatic regulator means having an inlet port, an outlet port, a discharge port, and a sensed control pressure port, each adapted for connection, respectively, to the pneumatic fluid source, the pneumatic signal load, the transducer external environment, and to pneumatic pressure-to-electrical signal conversion means, said regulator means including valve means responsive to electrical gate signals presented thereto for directing pneumatic source fluid from said inlet port, alternately, to said outlet port and said discharge port to provide the actual control pressure pneumatic signal to the load; and

electronic control means, responsive to the desired control pressure electrical signal and including pneumatic pressure-to-electrical signal conversion means connected for response to said sensed control pressure port for providing a sensed control pressure electrical signal representative of the actual value of the control pressure pneumatic signal at said outlet port, said electronic control means comparing the desired control pressure electrical signal to said sensed control pressure electrical signal to provide said electrical gate siganls to said pneumatic regulator valve means in response to a difference magnitude therebetween.

2. The transducer apparatus of claim 1, wherein:
said valve means includes source valve means connected between said inlet and said outlet ports and includes discharge valve means connected between said discharge and said outlet ports, each valve providing fluid passage therethrough in the presence, respectively, of a source valve electrical gate signal and a discharge valve electrical gate signal, each valve preventing fluid passage therethrough at all other times; and wherein;
said electronic control means provides said source gate signal and said discharge gate signal alternately, each in the absense of the other.

3. The transducer apparatus of claim 2, wherein:
said electronic control means provides said source gate signal and said discharge gate signal in response to oppositely polled difference magnitudes between said desired control pressure electrical signal and said sensed control pressure electrical signal appearing outside of a deadband interval of difference magnitudes, whereby the presentation of either said electrical gate signals occurs at absolute difference values equal to or greater than the associated limit of said deadband interval.

4. The transducer apparatus of claim 3, wherein said electronic control provides and removes said source and discharge gate signals from the corresponding valves in a hystereses fashion over individual valve hystereses intervals within said deadband interval.

## EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | US-A-3 726 307 (R.J. CARMAN et al.)<br>* Column 2, line 45 - column 10, line 26; figures 1-4 * | 1-4 | G 05 D 16/20 |
| | --- | | |
| X | US-A-4 084 539 (R.W. SCHMIDT)<br>* Column 1, line 48 - column 2, line 12; column 2, lines 51-66; figures 1,2 * | 1,2 | |
| | --- | | |
| X | GB-A-2 016 746 (KNORR-BREMSE)<br>* Page 1, lines 3-20; page 2, line 89 - page 3, line 66; page 4, lines 39-61; figures 2,3,5 * | 1-3 | |
| | ----- | | TECHNICAL FIELDS SEARCHED (Int. Cl. 3)<br><br>G 05 D 16/00 |

The present search report has been drawn up for all claims

| Place of search<br>THE HAGUE | Date of completion of the search<br>12-01-1984 | Examiner<br>POINT A.G.F. |
|---|---|---|